Europäisches Patentamt

European Patent Office

Office européen des brevets

(19)

(11) Publication number: **0 127 926**
**B1**

(12) # EUROPEAN PATENT SPECIFICATION

(45) Date of publication of patent specification: 26.11.86

(51) Int. Cl.⁴: **B 01 D 15/08**, G 01 N 30/02

(21) Application number: **84301491.1**

(22) Date of filing: **07.03.84**

(54) **Chromatographic separation.**

(30) Priority: **03.06.83 US 501033**

(43) Date of publication of application:
**12.12.84 Bulletin 84/50**

(45) Publication of the grant of the patent:
**26.11.86 Bulletin 86/48**

(84) Designated Contracting States:
**DE FR GB**

(56) References cited:
**DE-A-2 729 462**

**ANGEWANDTE CHEMIE, vol. 92, no. 8, 1980, Weinheim U. VAN WASEN et al. "Physikalisch-chemische Grundlagen und Anwendungen der Fluidchromatographie (SFC)", pages 585-598**

**CHEMIE-INGENIEUR-TECHNIK, vol. 42, no. 13, 1970, Weinheim G.W.A. RIJNDERS "Chromatographie mit überkritischer mobiler Phase", pages 890-898**

(73) Proprietor: **Hewlett-Packard Company Mail Stop 20 B-O 3000 Hanover Street Palo Alto California 94304 (US)**

(72) Inventor: **McManigill, Douglas 250 Wilton Avenue Palo Alto California 94306 (US)** Inventor: **Lauer, Hermanus Hendrik 1321 Truman Street Redwood City California 94061 (US)**

(74) Representative: **Schulte, Knud, Dipl.-Ing. c/o Hewlett-Packard GmbH Europ. Patent- und Lizenzabteilung Postfach 1430 Herrenberger Strasse 130 D-7030 Böblingen (DE)**

Courier Press, Leamington Spa, England.

**0 127 926**

**Description**

This invention is concerned with chromatographic separation.

A major constraint on the technique of chromatography studies lies in the selection of suitable fluids to transport the sample through the stationary phase of a chromatographic channel, for example a column. In practice, complex mixtures must not only be chromatographically resolved, but must be resolved quickly, efficiently, and inexpensively. High throughput in a chromatograph is closely coupled to the physical and chemical properties of the fluid being used as the transport medium, and considerable research has been done to find fluids which can optimize this chromatographic practice.

In general, a suitable chromatographic transport fluid exhibits a combination of the following "optimum" properties:

1. Solubility of the sample in the fluid.
2. A high diffusivity of the sample in the fluid.
3. A low shear viscosity of the fluid.
4. The fluid must be transparent to the detector.

Practical chromatographic fluids do not necessarily exhibit all of these properties, and as a result, often limit the range of application of the process in which they are used. Two obvious examples of limitations imposed by the transporting fluid can be seen in the prior techniques of gas chromatography and liquid chromatography.

In gas chromatography, there is no solubility of the sample in the fluid. To be transported through the column, the sample must be vaporized, usually at high temperature. The transport fluid, frequently an inert gas, simply pushes the vaporized sample through the column. This imposes the immediate constraints that the sample must be vaporizable, that is, that it has an appreciable vapor pressure, and that it does not thermally decompose at the temperatures required for operation. It has been authoritatively estimated that only 20% of chromatographically interesting compounds exhibit these properties.

The use of liquids as chromatographic eluents obviates this limitation of gas chromatography, but not without imposing constraints due to inherently higher viscosity, lower diffusivity, and often lack of transparency to the detector. The first two constraints affect the speed of analyses (throughput) and impose stringent mechanical requirements on the solvent delivery system; the third constrains the range of application by limiting the type of solvent used in the apparatus.

In order to overcome these shortcomings inherent in both these techniques, the prior art technique of Supercritical Fluid Chromatography (SFC) is used. The use of supercritical fluids as mobile phases in chromatography was first reported by Klesper, Corwin and Turner, D. A. J. Org. Chem. 1962, 27, 700. Since that time a considerable volume of publications has appeared, and the technique has been demonstrated for a variety of mobile phases, stationary phases, and potential analytical applications. Previous work has emphasized the desirable physical characteristics of supercritical fluids used as mobile phases. In particular, viscosity, solute diffusivity, and solubility are regarded in the literature as favorable for chromatography. Considerable experimental difficulty has been tolerated to maintain the mobile phase above the critical conditions which, for solvents like $NH_3$, requires pressures and temperatures above 115 bar and 133°C.

In short, supercritical fluid chromatography attempts to exploit the favorable properties of high solubility, high diffusivity, low viscosity and transparency which have been found to exist in gases which have been compressed and heated to conditions above their inherent critical points, thus ensuring gas-like conditions within the chromatographic column. Experiments using supercritical carbon dioxide as the mobile phase, however, have shown that although supercritical fluids can be used quite effectively as transport media, the temperatures and pressures required to maintain supercritical conditions within the apparatus severely limit the application of this technique. For example, carbon dioxide, with its moderate critical parameters of 31°C and 72 Bar, is well suited for use in equipment of present technology, but is of limited usefulness as a chromatographic solvent due to its nonpolar structure. More polar gases, such as ammonia, have higher critical temperatures, often in excess of 100°C, which create special problems for injection devices, and thermally labile compounds. Such temperatures can even cause decomposition and dissolution of column packing materials.

The present invention provides an apparatus for chromatographically separating substances characterized in that the transport medium through the stationary phase is an inorganic gas compressed to subcritical liquid densities.

The present invention further provides a method for chromatographically separating substances characterized by using an inorganic gas compressed to subcritical liquid densities.

To overcome the shortcoming of both gas chromatography and liquid chromatography and supercritical fluid chromatographic techniques, liquified inorganic gases (LIB) that have been compressed to the liquid state, but maintained at less than critical temperature are used as chromatographic media. These liquified inorganic gases retain many of the favorable attributes of supercritical fluids, but none of the disadvantages to greatly decrease the burden on the design of the hardware. By so compressing these liquified inorganic gases to subcritical temperatures the range of application of the supercritical fluid chromatographic technique can be extended to include thermally labile compounds and compounds which have been diluted in low boiling point liquid solvents (including water), with little or no loss of

2

**0 127 926**

chromatographic efficiency. Direct advantages of this technique over supercritical fluid chromatography are as follows:

1. Permits a broader exploitation of the unique physical and chemical properties of liquified and dense gases.

2. Enables operation with gases which are of chromatographic interest but would be difficult to use due to high critical pressures and temperatures.

3. Expands the range of application of supercritical fluid chromatography by permitting low temperature operation.

4. Permits the use of low boiling point solvents for sample work up and dilution.

5. Reduces the number of instrumental temperature zones (injector, transfer lines, detector) from those required in a supercritical fluid chromatographic apparatus.

There now follows a detailed description which is to be read with reference to the accompanying diagrams of method and apparatus according to the invention selected to illustrate the invention by way of example and not by way of limitation.

In the Figures:—

Figure 1 is a phase diagram of $CO_2$, broken lines indicating isotherm crossing under isobaric (171 bar) and constant density (0.70, 0.80, 0.90 g/cm) conditions;

Figure 2 shows the viscosity of $CO_2$ as a function of temperature and pressure, broken lines indicating constant density conditions;

Figure 3 shows the diffusivity of naphthalene in $CO_2$ as a function of temperature at different densities, the broken line with squares indicating isobaric conditions, and the open circles (O) being data from the prior art;

Figure 4 shows Van't Hoff plots of model compounds in $CO_2$ at constant density;

Figure 5 shows Van't Hoff plots of model compounds in $N_2O$ at constant density;

Figure 6 shows the separation of PAH's in $CO_2$ at sub- and supercritical conditions: elution order, 2-methylnaphthalene, phenanthrene, fluoranthene, pyrene; column, Speri-5, RP-18; flow rate, 1.20 $cm^3$/min; wavelength, 254 nm; sample, 2.5 $mm^3$; at 23.8°C, inlet pressure 98 bar, outlet pressure 82 bar; at 40.0°C, 177 and 163 bar, respectively;

Figure 7 shows the separation of PAH's in $N_2O$ at sub- and supercritical conditions. Elution order and other conditions are given in Figure 6; at 23.8°C, inlet pressure 87 bar, outlet pressure 69 bar; at 40.3°C, 163 and 149 bar, respectively;

Figure 8A shows the separation of a test mixture in liquid $NH_3$: elution order, dimethyl phthalate, diethyl phthalate, biphenyl, o-terphenyl; column, PRP-1 flow rate, 2.50 $cm^3$/min; wavelength, 265 nm; sample, 6 $mm^3$, temperature, 40.0°C; inlet pressure, 177 bar; outlet pressure, 172 bar; and

Figure 8B shows the separation of alkaloids in liquid $NH_3$; elution order, caffeine, theophyline, nicotine; temperature, 30.0°C; inlet pressure, 180 bar; outlet pressure, 174 bar; other conditions, as in Figure 8A.

Through examples of possible compressed liquid inorganic gases as transport media, we have studied the chromatographic usefulness of several inorganic gases ($CO_2$, $N_2O$, $NH_3$) as mobile phases, which have been compressed to liquid densities and maintained at near critical temperatures. We find that the logarithms of the coefficients of binary diffusion, as well as the logarithm of relative retention factors, at constant mobile phase density, exhibit a smooth linear dependence on reciprocal temperature when the critical isotherms are crossed, while mobile phase viscosity remains constant.

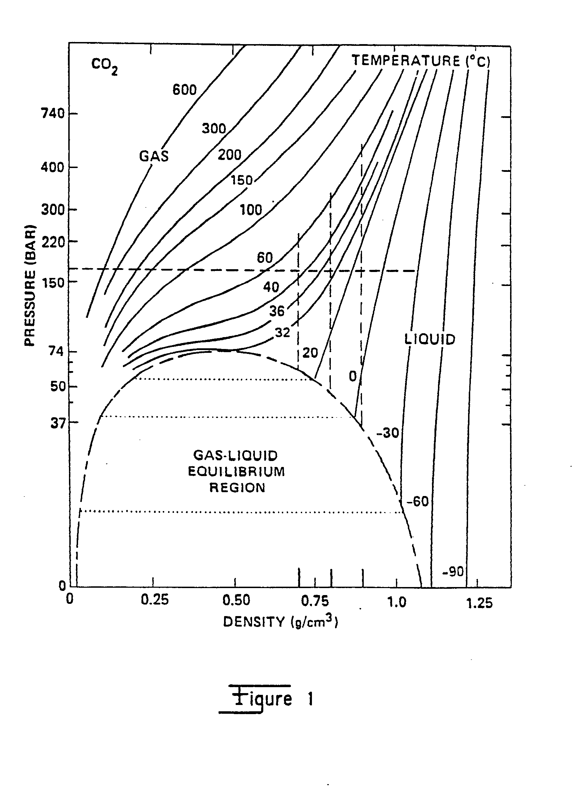

As an example of the invention, $CO_2$ will be discussed. Figure 1 shows well known pressure-density isotherms for $CO_2$. Fluid extraction using $CO_2$ may be performed in a region such that P is between 74 and 400 bar, rho is between 0.25 and 1.0 grams per cubic centimeter, and T is between Tc and 62°C. in accordance with the present invention, this temperature range is extended and $CO_2$ in the liquid state (down to −30°C) is used to perform liquid chromatography. The viscosity of the liquid phase $CO_2$ is kept low and the diffusivity of the solute in the mobile phase is kept high so that effective mass transfer is achieved with the stationary phase. Figure 1 also shows the diffusivity of naphthalene in $CO_2$ by crossing the isotherms in the phase diagram at isodensities of 0.70, 0.80, and 0.90 grams per cubic centimeter and via an isobar at 171 bar (shown as broken lines in Figure 1). The isotherms were crossed at 0.80 grams per cubic centimeter.

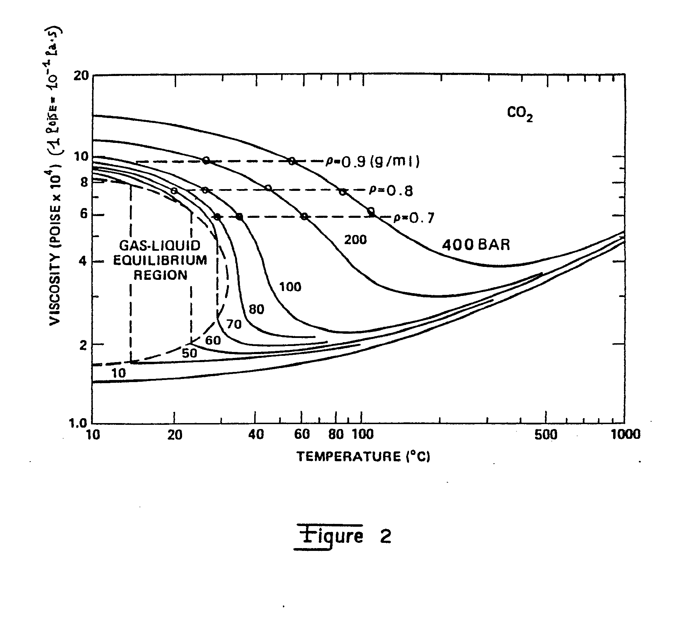

A plot of the dynamic viscosity of $CO_2$ as a function of temperature and pressure is shown in Figure 2. If, for chromatographic purposes, a temperature and pressure range of 10°C, 400 bar and 100°C, 75 bar is considered, the Figure shows that the dynamic viscosity changes from $16 \times 10^{-4}$ to $2 \times 10^{-4}$P ($1P = 0.10$ Pa·s). However, in following constant density loci, changes in viscosity can be avoided as shown by the broken lines in Figure 2.

The viscosities of $CO_2$ and $NH_3$ together with those of some commonly used chromatographic solvents are shown in Table I for a broad temperature range.

3

TABLE I
Viscosities of $CO_2$, $NH_3$, and common liquids[a] at different temperatures and pressures
$10^4$,P (1P=0.10 Pa·s)

| T,°C | P,bar | $CO_2$ | $NH_3$ | $CH_3CN$ | MeOH | $H_2O$ | $H_2O$/ $CH_3CN$ (60/40 (v/v)) | $H_2O$/ MeOH (60/40 (v/v)) | $C_6H_{14}$ |
|------|-------|--------|--------|----------|------|--------|--------|--------|--------|
| −30 | 400 | 22.9 | 31.4 | | | | | | |
| 20 | 100 | 8.3 | 16.6 | 35.3 | 59.7 | 100.2 | | | 32.6 |
| | 200 | 10.3 | 17.0 | | | | | | |
| | 400 | 13.0 | 17.8 | | | | | | |
| 25 | | | | 34.5 | 54.7 | 89.0 | 96.1 | 142.4 | 29.4 |
| 40 | 100 | 4.9 | 13.3 | 29.2 | 45.6 | 65.3 | | | 27.1 |
| | 200 | 8.0 | 13.6 | | | | | | |
| | 400 | 10.8 | 14.5 | | | | | | |
| 50 | | | | | | | | | 24.8 |
| 60 | 100 | 2.4 | 9.8 | 24.5 | 35.1[f] | 46.7 | | | |
| | 200 | 6.1 | 10.3 | | | | | | |
| | 400 | 9.1 | 11.5 | | | | | | |

[a] Liquid Viscosities at 1 atm

At ambient temperature (20 to 25°C) the viscosities of the liquified gases are much lower than those of the common solvents (at STP) whereas the mixtures of water with acetonitrile and methanol (often used in HPLC) show high viscosity values. Even at low temperature ($-30$°C) the rheologic behavior of the liquified gases will be close to that of n-hexane at ambient temperature.

The rate of diffusion of a compound in different fluids under varying conditions (P,T,$\rho$) is largely responsible for the exchange of mass between mobile and stationary phase in a chromatographic column. High diffusion rates (or diffusion coefficients) favor good separation characteristics in column chromatography.

To study this effect in $CO_2$, the binary diffusion coefficient of a model compound (naphthalene) was measured in a flow-through open tube. According to Taylor-Aris in the prior art, the broadening of a concentration profile per unit length can be described as

$$H_i = \frac{2D_{if}}{u_o} + \frac{r_o^2 u_o}{24D_{if}} \tag{1}$$

in which $H_i$ is the theoretical plate height of component i, in the fluid (f), $D_i$ is the diffusivity of i in f, $u_o$ is the linear velocity $= L/t_R$, L being the tube length and $t_R$ the mean residence time, and $r_o$ is the tube inner radius.

For straight tubes a virtually Gaussian concentration profile is obtained if

$$D_{eff}/u_o L < 0.01 \tag{2}$$

in which the effective diffusivity ($D_{eff}$) can be described as

$$D_{eff} = D_{if} + \frac{r^2 u_o^2}{48D_{if}} \tag{3}$$

for coiled tubes Equation (1) only applies if

$$DeSc^{1/2} < 10 \tag{4}$$

where the Dean (De) and Schmidt (Sc) numbers are defined as follows

$$De = Re\lambda^{-1/2} = \frac{\rho u_o d_{tube}}{\eta} \left( \frac{d_{tube}}{d_{coil}} \right)^{1/2}$$

$$Sc = \eta/\rho D_{if}$$

and Re stands for the well-known Reynolds number.

Under the conditions of Equation (4) the first term in Equation (1) can be neglected and the binary diffusion coefficient calculated from

$$D_{if} = \frac{r_o^2 u_o}{24H_i} \tag{5}$$

The tube radius, $r_o$, was calculated from

$$r_o = \left( \frac{Ft_R}{\pi L} \right)^{1/2} \tag{6}$$

in which F=volume flow rate through the tube. Plate height, $H_i$, was calculated according to

$$H_i = L(\sigma_{ti}/t_R)^2 \tag{7}$$

in which $\sigma_{ti}$ is the half width of the peak at 0.607 of its height in time units as observed on the recorder plot. Effects of external band broadening on plate height due to injection and instrument dead volume were neglected.

**0 127 926**

TABLE II
Comparison of experimental diffusivities with data from the literature

| Compound | Fluid | T,°C | P,bar | concn, μg/mm³ | Solvent | $S^{10a}$ | $10^5 D,^b$ cm²/s | $10^5 D_2$,cm²/s Lits. | Calcd |
|---|---|---|---|---|---|---|---|---|---|
| benzene | $CO_2$ | 40.1 | 160.3 | pure | | 1.30 | 12.6 | 12.9 | |
| naphthalene | $CO_2$ | 40.1 | 160.3 | 80 | $C_6H_{14}$ | 1.30 | 11.2 | 11.2 | |
| caffeine | $CO_2$ | 40.1 | 160.3 | 40 | $CH_2Cl_2$ | 1.19 | 8.7 | 7.9 | |
| aniline | $CH_3OH$ | 40.8 | 157.5 | 80 | $CH_3OH$ | 1.16 | 2.40 | | $2.46^d$ |
| | | 15.0 | | | | | $1.53^c$ | 1.49 | $1.57^d$ |

[a] $S^{10}$=Asymmetry factor calculated from 10% of the peak height.
[b] Average value from four separate measurements with an overall precision of 2.9±0.6%.
[c] Conversion of experimental value at 40.8°C to 15.0°C by means of Wilke's equation ($D\eta/T$=constant).
[d] Calculated from the Wilke-Chang equation with an association parameter of 1.9 for methanol.

The reliability of the experimental equipment was investigated by comparing the observed binary diffusion coefficients with data obtained from the literature. The results and the quality of agreement are shown in Table II.

The solid samples, such as naphthalene and caffeine, had to be dissolved in a suitable solvent prior to injection. Possible solvent effects on experimentally obtained diffusivities appeared to be negligible (within experimental error) for benzene and are shown in Table III. Therefore, it was assumed that solvent effects are negligible for naphthalene and caffeine as well (see also Table II).

TABLE III
Investigation of solvent effects on the diffusivity of benzene in $CO_2$

| Solvent | Concern μg/mm³ | T,°C | P,bar | $10^5 D,^{(a)}$ cm²/s |
|---|---|---|---|---|
| none | | 40.1 | 160.3 | 12.6 |
| $CH_2Cl_2$ | 80 | 40.1 | 160.3 | 12.5 |
| $C_6H_{14}$ | 80 | 40.1 | 160.3 | 12.2 |
| $CH_3OH$ | 80 | 40.1 | 160.3 | 12.4 |

[(a)] As in Table II

Experimental diffusivities of naphthalene (dissolved in n-hexane to a concentration of 80 μg/mm³) are shown in Table IV.

6

# 0 127 926

TABLE IV

Experimental diffusivities of naphthalene in $CO_2$ at different densities

| T,°C | P,bar | $\rho$,[a] g/cm³ | $S^{10}$ | $10^5 D$,[b] cm²/s |
|---|---|---|---|---|
| 15.2 | 172.0 | 0.943 | 1.10 | 8.43 |
| 25.2 | 170.6 | 0.893 | 1.15 | 9.68 |
| 40.5 | 171.3 | 0.806 | 1.18 | 11.6 |
| 54.9 | 170.6 | 0.704 | 1.41 | 13.4 |
| 20.1 | 67.2 | 0.802 | 1.20 | 10.9 |
| 25.0 | 90.7 | 0.801 | 1.21 | 11.0 |
| 40.4 | 163.8 | 0.796 | 1.29 | 11.4 |
| 54.9 | 238.9 | 0.800 | 1.26 | 12.0 |
| 15.1 | 111.4 | 0.900 | 1.16 | 9.16 |
| 25.1 | 179.6 | 0.900 | 1.15 | 9.46 |
| 40.4 | 351.3 | 0.898 | 1.19 | 9.80 |
| 49.9 | 351.3 | 0.900 | 1.18 | 10.4 |
| 40.7 | 116.2 | 0.695 | 1.46 | 12.8 |
| 47.0 | 142.0 | 0.705 | 1.42 | 13.2 |

[b] As in Table II

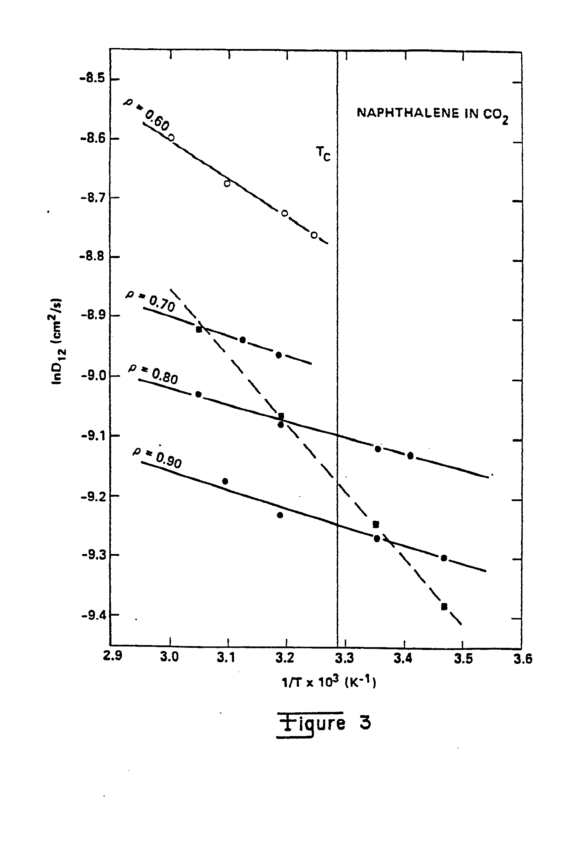

A plot of 1n D vs. 1/T is depicted in Figure 3 at a density of 0.60 g/cm³. All data show a smooth linear dependence of 1n D vs. 1/T with no anomalies in passing through the critical temperature of $CO_2$ at the densities 0.80 and 0.90 g/cm³.

At a density of 0.70 g/cm³ no reliable data below the critical temperature could be obtained due to possible phase separation (gas-liquid), as can be seen from Figure 1. In addition, Table IV shows that the asymmetry factor $S^{10}$, of the recorded concentration profiles at a density of 0.70 exceeds 1.40, which probably affects the absolute accuracy of the data at this density. Profiles with asymmetry factors in excess of 1.30 should therefore be rejected. Moreover, we were not able to reproduce Feist's data at a density of 0.60 due to severe tailing ($S^{10}>1.80$) which suggests adsorption of naphthalene on the Teflon inner wall of the tube. Feist and Schneider however used plain stainless steel tubing and reported severe tailing of caffeine at densities below 0.70. The presence of tailing was confirmed also by our experiments with stainless steel at a higher density (0.80) but appeared nonexistent with the Teflon inner tube.

In passing the critical temperature over an isobar (~171 bar, see Table IV and broken lines in Figures 1 and 3) the consistency in behavoir of the previous data was confirmed. This isobaric approach appears well suited to estimate diffusivities at lower temperatures via simple extrapolation. The diffusivity of naphthalene in $CO_2$ at −30°C (171 bar; σ=1.07), obtained in this way, appears to be ~4.4×10⁻⁵ cm²/s. This is comparable to the calculated diffusivity of naphthalene in n-hexane at 25°C. (~3.5×10⁻⁵cm²/s) and, together with the before mentioned favorable rheologic behavior of $CO_2$ at low temperatures, suggests that a powerful method for analysis of extremely thermolabile compounds could emerge.

In a dense gas the retention behavior of a particular compound is commonly described by its relative retention or capacity factor, k', which is a strong function of pressure, density, and temperature as observed and described by many authors. The effect of temperature on retention in super-critical $CO_2$ at constant density has been reported by van Wasen in the prior art. To investigate whether retention behavior changes drastically in going from the dense gas to liquid state, the van't Hoff plots (1n k' vs. 1/T) were investigated for $CO_2$ and $N_2O$ with a number of model compounds at a density of 0.80 g/cm³ on a PRP-1 column.

Lacking a suitable density equation for $N_2O$, the law of corresponding states (equal reduced parameters) was used to calculate the experimental pressures and temperatures of this fluid from its respective critical values (see Table V).

7

TABLE V
Critical parameters of different fluids

| Fluid | $T_c$,°C | $P_c$,bar | $\sigma_c$,g/cm$^3$ |
|---|---|---|---|
| $CO_2$ | 31.06 | 73.825 | 0.464 |
| $N_2O$ | 36.41 | 72.45 | 0.452 |
| $HN_3$ | 132.4 | 114.80 | 0.235 |

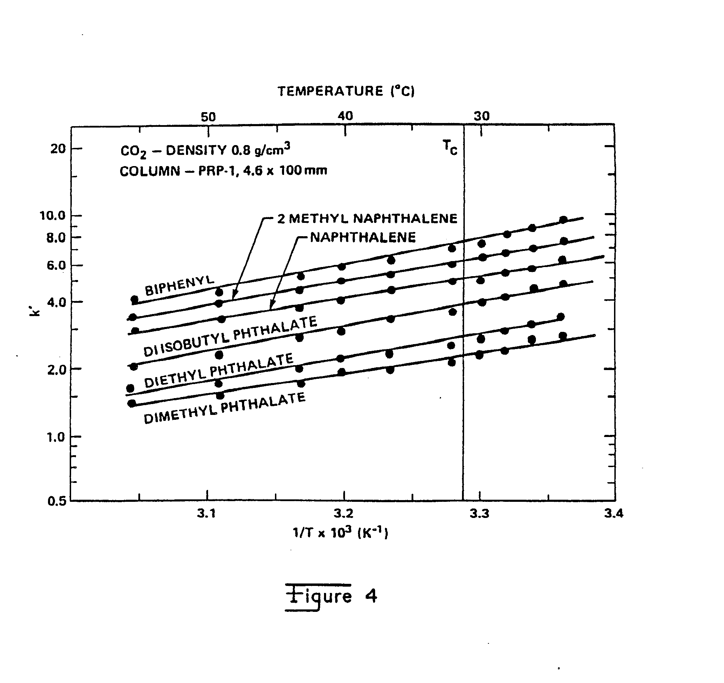

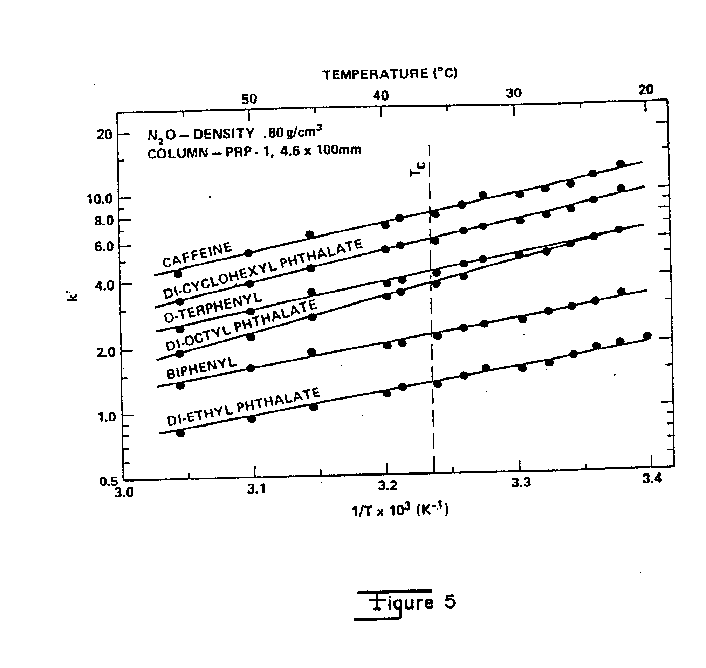

The resulting plots are displayed in Figure 4 ($CO_2$) and Figure 5 ($N_2O$) and reveal that none of the eluted compounds in either fluid shows an anomalous behavior. Moreover, the average enthalpy of elute interaction with the stationary phase (evaluated from the slope—H/R) is approximately −6 kcal/mol which is very close to those values reported in reversed-phase liquid chromatography in the prior art.

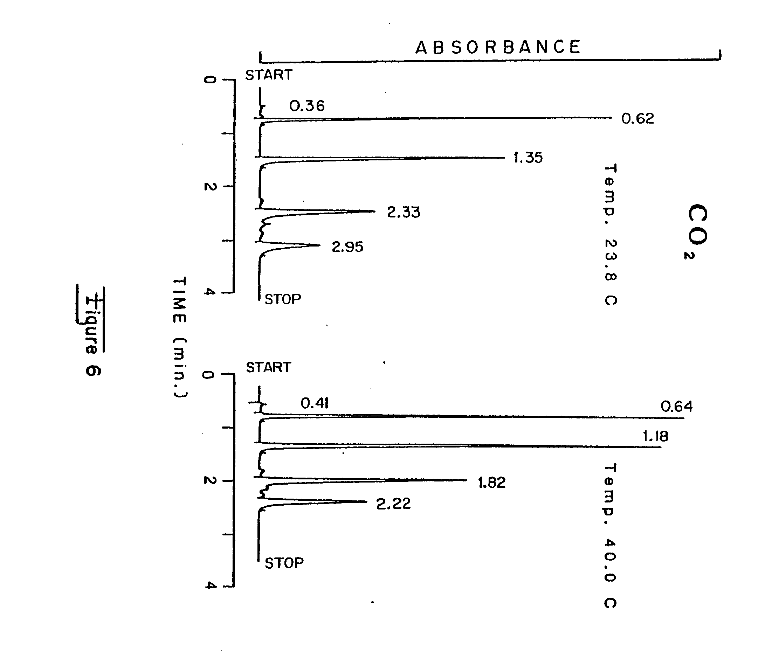

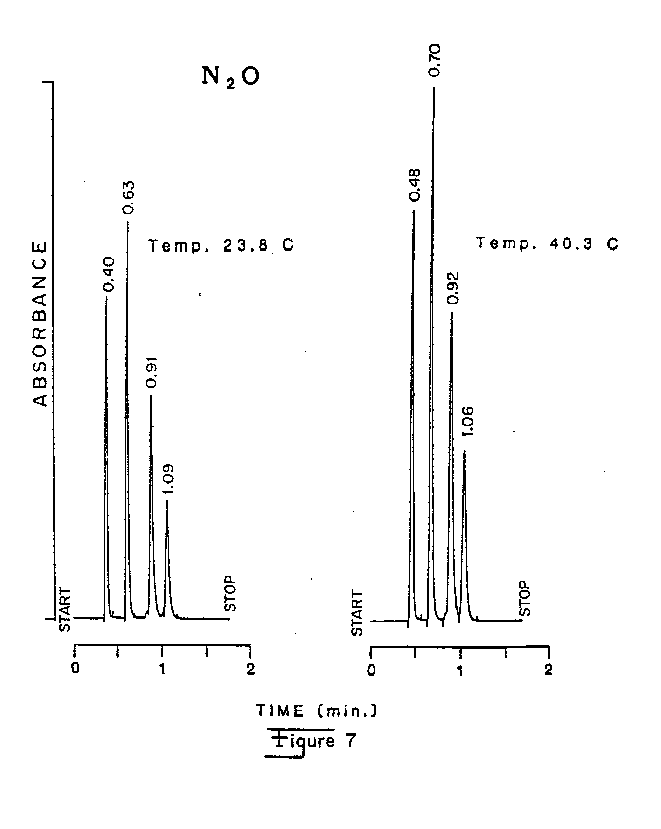

Figures 4 and 5 also show interesting selectivity differences on the PRP-1 column with the investigated fluids. Caffeine did not elute in $CO_2$ and the other model compounds, also, were more strongly retained when $CO_2$ was used as the mobile phase. The model compounds were observed to be less strongly retained on a hydrocarbonaceous bonded phase column. For this reason chromatograms of a mixture of PAH's separated on a RP-18 column in both fluids at sub- and supercritical conditions are shown in Figures 6 and 7.

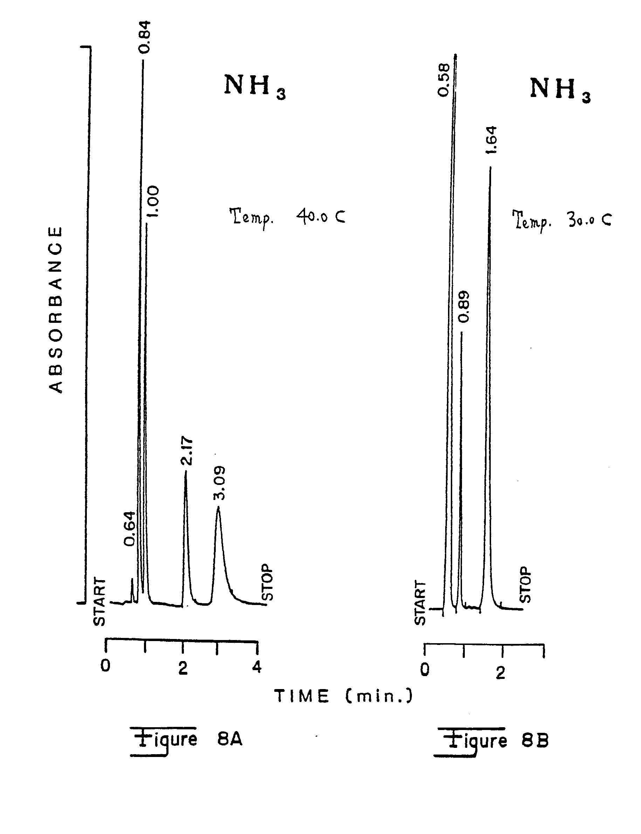

The promising combination of liquid $NH_3$ and a PRP-1 column is shown in Figure 8. The easy and fast separation (Figure 8B) of compounds with polar functional groups such as caffeine, theophylline, and nicotine merits special attention.

In practically useful separations, however, the capacity factor (k') of the first peaks in Figures 7 and 8 has to be increased in order to allow separation from possible interferences. The unusually rapid increase in peak width, as shown in Figure 8A, may arise from relatively slow mass transfer in this stationary phase.

The physical aspects of chromatographic separation in accordance with the invention for several solute, mobile-phase, and stationary-phase combinations in the near critical region have been discussed. It is observed that the logarithms of the coefficient of binary diffusion and relative retention factor, at constant density, exhibit smooth linear dependence on reciprocal temperature as the critical isotherm is crossed, while mobile phase viscosity remains constant. Examples of chromatographic separations of model compounds at sub- and supercritical temperatures are demonstrated for $CO_2$, $N_2O$, and for subcritical $NH_3$. These investigations indicate that the useful range of applications for supercritical fluids can be extended to include thermally labile compounds and to fluids which have inherently high critical temperatures.

**Claims**

1. An apparatus for chromatographically separating substances characterized in that the transport medium through the stationary phase is an inorganic gas compressed to subcritical liquid densities.

2. A method for chromatographically separating substances characterized by using an inorganic gas compressed to subcritical liquid densities.

**Patentansprüche**

1. Vorrichtung zur chromatographischen Trennung von Substanzen, dadurch gekennzeichnet, daß das Transportmedium durch die stationäre Phase ein zu einer unterkritischen Flüssigkeitsdichte komprimiertes anorganisches Gas ist.

2. Verfahren zur chromatographischen Trennung von Substanzen, gekennzeichnet durch die Verwendung eines zu einer unterkritischen Flüssigkeitsdichte komprimiertes anorganisches Gas.

**Revendications**

1. Appareil de séparation chromatographique de substances, caractérisé en ce que le milieu de transport à travers la phase stationnaire est un gaz inorganique comprimé à des densités sous-critiques du liquide.

2. Procédé de séparation chromatographique de substances, caractérisé par l'utilisation d'un gaz inorganique comprimé à des densités sous-critiques du liquide.

8

Figure 1

Figure 2

Figure 3

Figure 4

Figure 5

Figure 6

Figure 7

Figure 8A

Figure 8B